# EUROPEAN PATENT APPLICATION

(11) **EP 2 298 091 A1**
(43) Date of publication of application: **23.03.2011**
(21) Application number: 10186457.7
(22) Date of filing: 28.04.2008
(51) Int. Cl.: A23N 1/00, A47J 19/02, B08B 3/02

(54) **Upper citrus rind cutter**

(62) Divisional of application: 08380124.1
(71) Applicant: FOOD MACHINERY ESPANOLA S.A., 46012 Valencia (ES)
(72) Inventor: Sanchez de León Rodríguez Roda, Juan Antonio, 46012 Valencia (ES)
(74) Representative: Elzaburu Marquez, Alberto

(57) **Abstract**

Upper citrus rind cutter (1), suitable for juice squeezing machines allowing feeding of a citrus fruit on belts, aligning and separating of the fruit, and subsequent individualized treatment between two cups with two cutters, one upper and one lower, that are suitable for making an incision in the fruit to draw off the juice. It is not necessary to take apart the cups that hold the citrus fruit to change the cutter (1), since the cutter (1) is secured to the cup holder (9) by a lateral screw (7), fastener, pin or similar means thanks to an opening made in the cup holder (9) that coincides with a peripheral groove (8) which the cutter (1) has at the top for this purpose.

## Description

### OBJECT

The object referred to by this invention consists of an "Upper citrus rind cutter", which allows for easy assembly and disassembly without the need to take apart at any time the entire system of cups as was previously the case.

### BACKGROUND

The known procedure for squeezing juice from fruit, especially citrus fruits, consists of putting the fruit into a machine that performs this function. For this purpose, the fruit is channelled towards some lower cups that receive the fruit when the upper cups are at their highest point, allowing the fruit to become housed in the bottom of the lower cups. This positioning in the lower cups is achieved by means of rotating shafts that are synchronized with the position of the upper cups.

Two cutters (one upper and one lower) then make a circular incision, in a wedge or disk shape, on the upper and lower part of the fruit, respectively, to allow the juice to exit through the filter tube, located below the cups, towards a juice collector when the upper and lower cups compress the fruit.

In the state of the art, the upper cutter is related to the cup holder by twisting of the upper part of the cutter, which means that each change of cutter involves the disassembly of the cup holder that is secured to the cup holder shaft; this causes the two cups that hold the citrus fruit at the top and bottom to come apart, with the resulting loss of time during the change process.

### DESCRIPTION OF THE INVENTION

The purpose of the invention that constitutes the object of this Patent consists of the elimination of some functional and structural drawbacks inherent in the known object, and it has been designed and developed in accordance with this priority objective.

To change the cutter that is the object of the invention, it is not necessary to take apart the cups that hold the citrus fruit, since the cutter is secured to the cup holder by a lateral screw, fastener, pin or similar means thanks to an opening made in the cup holder that coincides with a peripheral groove which the cutter has at the top for this purpose, thus avoiding the need to disassemble the cup holder to replace the cutter.

### BRIEF DESCRIPTION OF THE DRAWINGS

To complement the description of the invention and to facilitate interpretation of the structural and functional characteristics of its object, drawings are attached hereto that schematically show a preferential embodiment of the upper cutter of the citrus rind which constitutes the object of this invention. In these drawings:

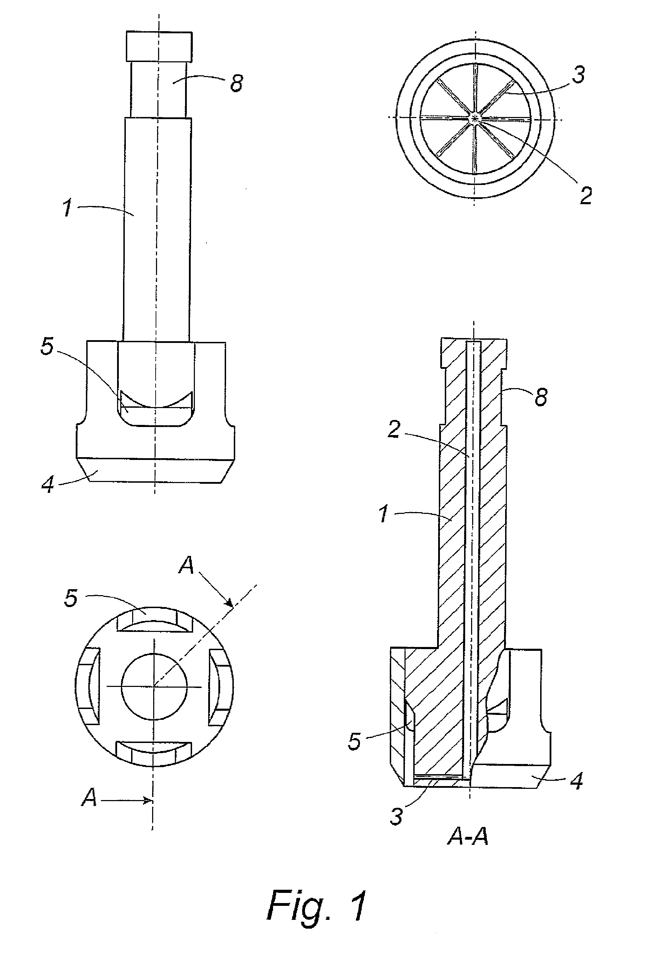

- Figure 1 shows different views of the upper citrus rind cutter.

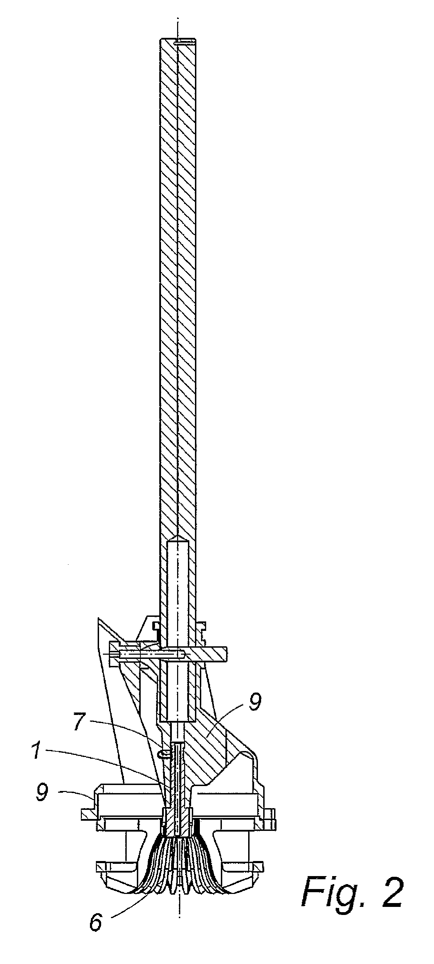

- Figure 2 shows a partial section of the assembly formed by the shaft, cutter and upper cup.

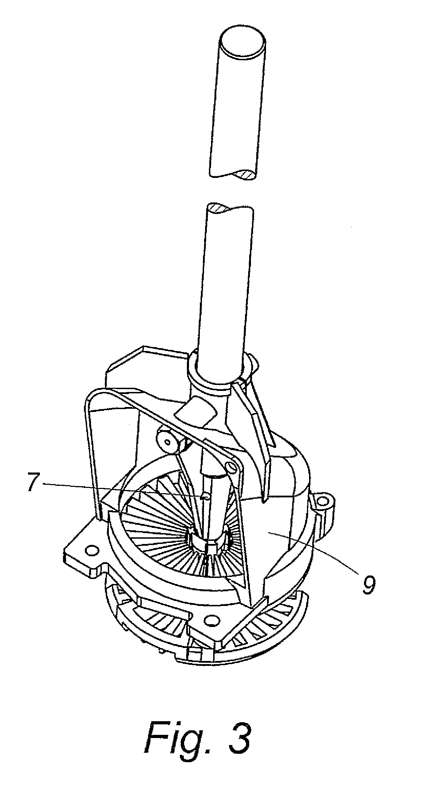

- Figure 3 shows a perspective of the above assembly.

### DESCRIPTION OF A PREFERENTIAL EMBODIMENT

To clearly show the nature and scope of the advantageous application of the upper citrus rind cutter, which constitutes the object of the claimed invention, following is a description of its structure with reference to the drawings which, as they represent a preferential embodiment of this object on a informative basis, should be considered in the broadest sense of the word and not as limitative of the application and contents of the claimed invention.

To change the cutter 1 that is the object of the invention, it is not necessary to take apart the cups 6 that hold the citrus fruit, since the cutter 1 is secured to the cup holder by a lateral screw 7, fastener, pin or similar means thanks to an opening made in the cup holder 9 that coincides with a peripheral groove 8 which the cutter 1 has at the top for this purpose, thus avoiding the need to disassemble the cup holder 9 to replace the cutter 1.

## Claims

1. - Upper citrus rind cutter (1), suitable for juice squeezing machines allowing feeding of a citrus fruit on belts, aligning and separating of the fruit, and subsequent individualized treatment between two cups with two cutters, one upper and one lower, that are suitable for making an incision in the fruit to draw off the juice, **characterized in that** the cutter (1) is secured to the cup holder (9) by a lateral screw (7), fastener, pin or similar means thanks to an opening made in the cup holder (9) that coincides with a peripheral groove (8) which the cutter (1) has at the top for this purpose.
